# EUROPEAN PATENT SPECIFICATION

(11) **EP 3 736 527 B1**
(45) Date of publication and mention of the grant of the patent: **23.03.2022**
(21) Application number: 18905650.0
(22) Date of filing: 02.11.2018
(51) Int. Cl.: G01B 5/20, G01B 5/28, G01B 5/00

(54) **SURFACE SHAPE MEASUREMENT DEVICE**
OBERFLÄCHENFORMMESSVORRICHTUNG
DISPOSITIF DE MESURE DE FORME DE SURFACE

(30) Priority: 07.02.2018 JP 2018020118
(43) Date of publication of application: 11.11.2020
(73) Proprietor: Tokyo Seimitsu Co., Ltd., Hachioji-shi, Tokyo 192-8515 (JP)
(72) Inventor: TAKANASHI, Ryo, Tsuchiura-city, Ibaraki 300-0006 (JP)
(74) Representative: DehnsGermany Partnerschaft von Patentanwälten
(86) International application number: PCT/JP2018/040879
(87) International publication number: WO 2019/155698

(56) References cited:
- GB-A- 564 209
- JP-A- H02 272 302
- JP-A- 2014 081 324
- US-A- 5 740 616
- US-B1- 6 397 667

## Description

### BACKGROUND OF THE INVENTION

### 1. Field of the Invention

The present invention relates to a surface shape measurement device which measures a surface shape of a measurement target surface.

### 2. Description of the Related Art

Surface shape measurement devices for measuring surface shapes of a measurement target surface of a workpiece are known. Such a surface shape measurement device includes: a stylus provided swingably around a swing fulcrum as a fulcrum; a detector having a sensing pin, etc. provided to a distal end of the stylus, and a drive part which moves the detector along the measurement target surface. In a state where the sensing pin of the detector is in contact with the measurement target surface, the surface shape measurement device causes the drive part to move the detector and the workpiece relative to each other in a horizontal direction, and thereby detects displacements of the stylus (sensing pin) while tracing the measurement target surface with the sensing pin. The surface shape of the measurement target surface can be obtained based on detected displacement results.

As a well known surface shape measurement devices, there is a portable type (skidded measurement type) measurement device which traces the measurement target surface with the sensing pin in a state where a skid provided to the detector is brought into contact with the measurement target surface (see Japanese Patent Application Laid-Open No. 2001-133247, hereinafter referred to as "Patent Literature 1"). This portable type surface shape measurement device can measure surface roughness of the measurement target surface as the surface shape of the measurement target surface by detecting the displacement of the stylus with respect to the skid.

In addition, the surface shape measurement device according to Patent Literature 1, the skid is detachably provided to the detector. Therefore, it is possible to selection a skidded measurement that traces the measurement target surface with the sensing pin in a state where the skid is attached, or a skidless measurement that traces the measurement target surface with the sensing pin in a state where the skid is detached. Thus, the surface shape measurement device according to Patent Literature 1 can measure, by performing the skidless measurement, the shape (steps or notches, etc.) of the measurement target surface and undulations of the measurement target surface.

US 6 397 667 B1 discloses a surface property measuring device including a detector having a stylus, and a driving mechanism for causing the detector to advance and retreat along a surface to be measured. The measuring device further comprises a main shaft fixed to a frame of the driving mechanism in parallel with an advancing and retreating direction of the detector, and a slide block which is shaped like a rectangle in the advancing and retreating direction of the detector, sliding on the main shaft, the main shaft being inserted through two of a fore and a rear portion of the slide block.

### SUMMARY OF THE INVENTION

However, the portable type (skidded measurement type) surface shape measurement device can measure the surface roughness as the surface shape of the measurement target surface, but cannot measure the surface shapes of the measurement target surface other than the surface roughness, for example, the shapes (steps or notches, etc.) of the measurement target surface and the undulations of the measurement target surface. Therefore, when the surface shapes of the measurement target surface other than the surface roughness is measured, an upper-grade surface shape measurement device having a straightness guarantee is needed to perform the measurement.

In addition, although the surface shape measurement device according to Patent Literature 1 can switch between the skidded measurement and the skidless measurement, the sensing pin may be caught by a step or notch and be damaged depending on a size of the step or notch in a case where a shape of the step or notch, etc. is measured by the skidless measurement.

The present invention, which has been made in view of the circumstances, aims to provide a surface shape measurement device which can simultaneously measure surface roughness of a measurement target surface and surface shapes other than the surface roughness of the measurement target surface, and also can prevent a sensing pin from being damaged.

In order to achieve the object of the present invention, a surface shape measurement device for measuring a surface shape of a measurement target surface, includes: a detector including: a stylus supported swingably around a swing fulcrum; a sensing pin provided in a distal end portion of the stylus and extending in one direction orthogonal or oblique to a longitudinal direction of the stylus; a skid provided in a position separated from the distal end portion of the stylus in the one direction; and an urging member configured to urge the stylus toward a first rotation direction which is one of rotation directions of the stylus around the swing fulcrum and in which the sensing pin is rotated in the one direction, so as to cause a tip of the sensing pin to protrude from the skid in the one direction; a first elastic support member configured to support the detector swingably in the first rotation direction and in a second rotation direction opposite to the first rotation direction; a drive part configured to move the first elastic support member along a driving direction which is orthogonal to an axis direction of the swing fulcrum and parallel to the measurement target surface; a detector guide having a linear shape, and configured to guide the detector driven by the drive part via the first elastic support member along the measurement target surface; a guide support member having one or multiple first contact points to be brought in contact with the measurement target surface, and configured to support the detector guide in an attitude substantially parallel to the measurement target surface and at a position facing a surface of the detector opposite to a surface of the detector facing the measurement target surface; and a detector support member provided to the detector, and configured to cause the detector guide to support the detector movably along the detector guide.

According to the surface shape measurement device, the detector is moved along the detector guide placed substantially in parallel to the measurement target surface. Therefore, the detector can perform skidless measurement of the measurement target surface with the measurement target surface (workpiece) serving as the reference, that is, so-called "with reference to a workpiece reference (with workpiece reference)". Furthermore, in a case where a step or notch, etc. of the measurement target surface has a large height, the skidless measurement can be automatically switched to a skidded measurement.

In the surface shape measurement device according to another aspect of the present invention, in a case where the stylus is rotated in the second rotation direction from a predetermined reference rotation position against an urging force of the urging member, the tip of the sensing pin still protrudes from the skid in the one direction until a rotation angle of the stylus in the second rotation direction reaches a certain angle. Therefore, the detector can perform the skidless measurement of the measurement target surface.

In the surface shape measurement device according to another aspect of the present invention, in a case where the rotation angle of the stylus in the second rotation direction reaches the certain angle and a force in a direction opposite to the one direction is further applied to the skid, the detector is rotated in the second rotation direction with reference to the first elastic support member. Therefore, in a case where the step or notch, etc. of the measurement target surface has a large height, the skidless measurement can be automatically switched to the skidded measurement so as to prevent the sensing pin from being damaged.

In the surface shape measurement device according to another aspect of the present invention, the detector support member includes: a guide insertion hole configured to allow the detector guide to be inserted therethrough; and a second contact point provided to an inner wall surface configuring the guide insertion hole of the detector support member, and configured to be in contact with a surface of the detector guide opposite to a surface of the detector guide facing the detector, and the detector support member causes the detector guide to support the detector via the second contact point. Therefore, in a case where the step or notch, etc. of the measurement target surface has a large height, the second contact point and the detector guide lose contact therebetween so that the skidless measurement can be automatically switched to the skidded measurement.

The surface shape measurement device according to the another aspect of the present invention, further includes: a case configured to house a part of the detector, the first elastic support member, and the drive part, the case including a case wall surface orthogonal to the driving direction, and a detector insertion hole formed in the case wall surface and configured to allow the detector to be inserted therethrough; and a second elastic support member provided to the case and configured to support the detector guide swingably in the first rotation direction and in the second rotation direction. Therefore, even in a case where the measurement target surface is non-horizontal, the detector guide can be placed substantially in parallel to the measurement target surface.

In the surface shape measurement device according to another aspect of the present invention, the guide support member is in contact with the measurement target surface at three first contact points. Therefore, the detector guide can be placed substantially in parallel to the measurement target surface.

In the surface shape measurement device according to another aspect of the present invention, the skid includes a sensing pin insertion hole configured to allow the sensing pin to be inserted therethourgh.

The surface shape measurement device of the present invention can simultaneously measure the surface roughness of the measurement target surface and the surface shapes other than the surface roughness of the measurement target surface, and prevent the sensing pin from being damaged.

### BRIEF DESCRIPTION OF THE DRAWINGS

Figure 1 is an external perspective view of a surface shape measurement device.
Figure 2 is an elevation view of the surface shape measurement device.
Figure 3 is a side view of the surface shape measurement device.
Figure 4 is a side view of a detector.
Figure 5 is a cross-sectional view of a measurement unit.
Figure 6 is a cross-sectional view of the measurement unit in a case where a measurement target surface is non-horizontal.
Figure 7 is an explanatory view for a measurement process of a surface shape of the measurement target surface by the surface shape measurement device.

### DESCRIPTION OF EMBODIMENTS

### [Entire Configuration of Surface Shape Measurement Device]

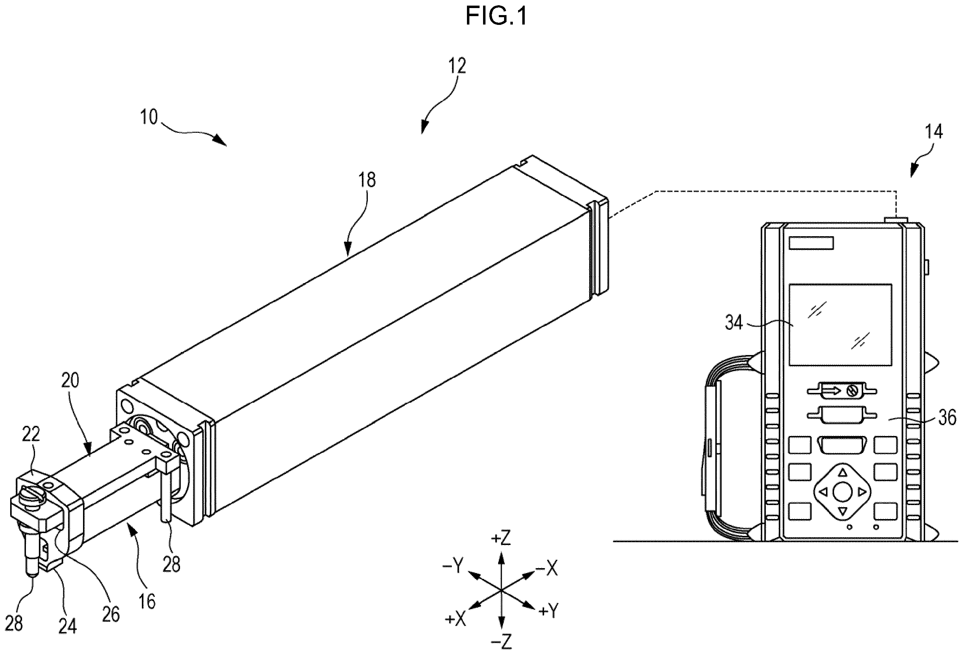

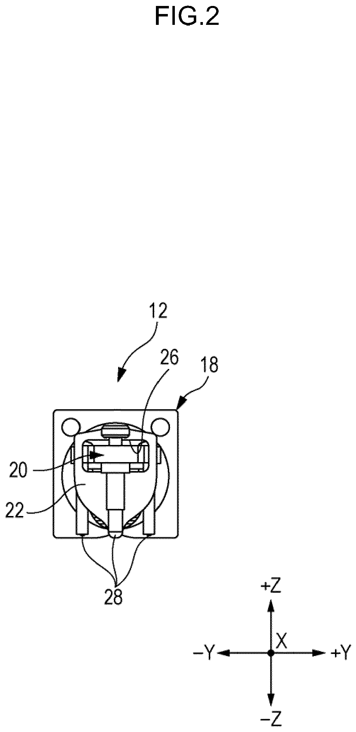

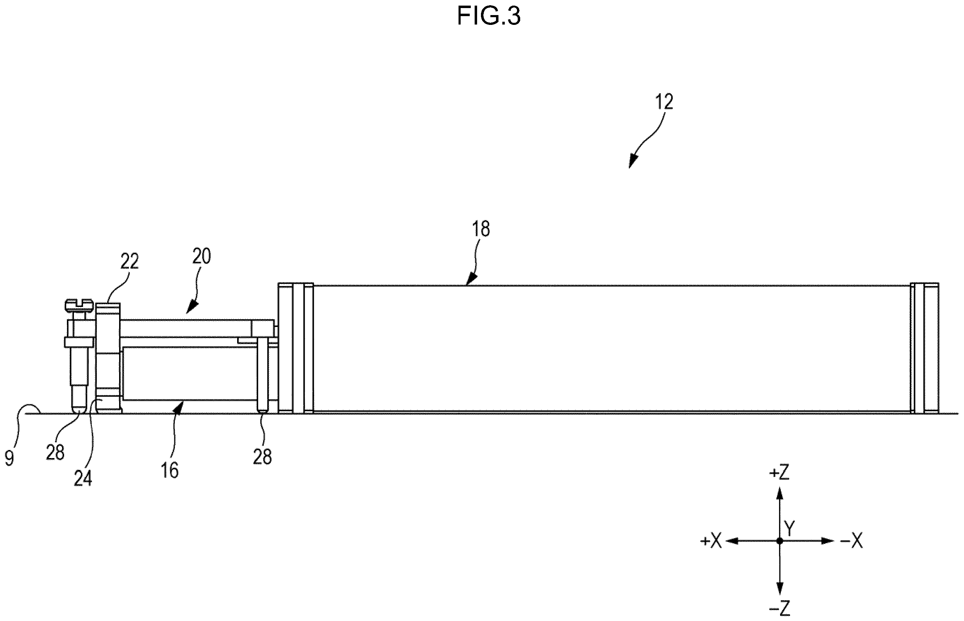

Figure 1 is an external perspective view of a surface shape measurement device 10. Figure 2 is an elevation view of the surface shape measurement device 10. Figure 3 is a side view of the surface shape measurement device 10. As illustrated in Figures 1 to 3, the surface shape measurement device 10 is a portable type (handy type) measurement device which is placed on a measurement target surface 9 of a workpiece (see Figure 3) and measures surface shapes of the measurement target surface 9. Here, the surface shapes of the measurement target surface 9 include surface roughness and the surface shapes (for example, shapes, undulations, etc. of the measurement target surface 9) of the measurement target surface 9 other than the surface roughness.

Here, X-, Y-, and Z-axes in Figures intersect at right angles each other, the X- and Y- axes are axes parallel to the horizontal direction, and the Z-axis is an axis orthogonal to the horizontal direction. Here in the description, the term, "parallel", inclusively designates a term, "substantially parallel", and the term, "vertical (orthogonal)", inclusively designates a term, "substantially vertical".

The surface shape measurement device 10 includes a measurement unit 12 and a data processing unit 14 (not shown in Figures 2 and 3). The measurement unit 12 includes a detector 16, a drive unit 18, and a detector guide 20.

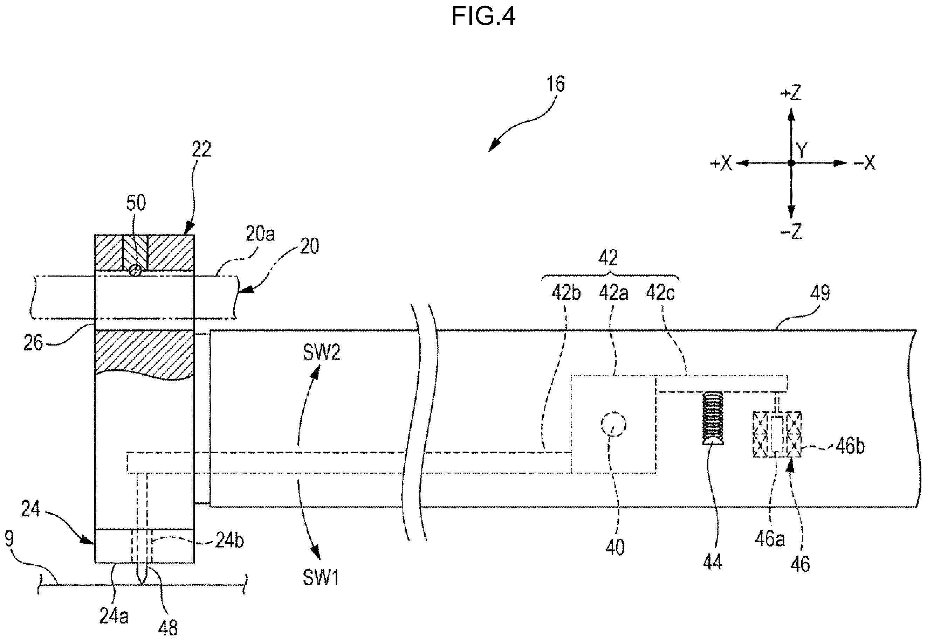

The detector 16, as described in detail below, has a shape extending in a direction parallel to the X-axis direction. The detector 16 is moved along the direction parallel to the X-axis direction (i.e. the measurement target surface 9) by the drive unit 18 so as to trace the measurement target surface 9 with a sensing pin 48 (see Figure 4). Then, the detector 16 outputs a detection signal indicating a displacement of a stylus 42 (see Figure 4) to the data processing unit 14.

A nose piece 22 is provided to a distal end portion of the detector 16 in a positive side in the X-axis direction. The nose piece 22, as described in detail below, includes a skid 24 and a guide insertion hole 26. The detector 16 is movably supported by the detector guide 20 via the nose piece 22.

The drive unit 18 has a shape extending in the direction parallel to the X-axis direction in a similar manner to the detector 16. The drive unit 18, as described in detail below, holds a base end portion of the detector 16 in a negative side of the X-axis direction, and moves the detector 16 in the direction parallel to the X-axis direction, i.e., along the measurement target surface 9. Therefore, the X-axis direction in the embodiment is equivalent to the driving direction of the present invention.

The detector guide 20, as described in detail below, is linearly formed and provided to an end portion of the drive unit 18 in the positive side in the X-axis direction. The detector guide 20 is supported in an attitude substantially parallel to the measurement target surface 9 by three guide placement points 28 (see Figure 2), and guides the detector 16 which is driven by the drive unit 18 along the measurement target surface 9.

The data processing unit 14 is electrically connected to each of the detector 16 and the drive unit 18. The data processing unit 14 includes a connector for the connection to an external device or an external storage medium, a power source switch used for an on-off operation of a power source, etc. (not shown), in addition to a display part 34 for displaying a variety of information and an operation part 36 for performing a variety of operations.

The data processing unit 14 controls the drive unit 18 in response to an operation input into the operation part 36 so as to move the detector 16, and thereby the measurement target surface 9 is traced with the sensing pin 48 (see Figure 4) of the detector 16 along the X-axis direction. In addition, the data processing unit 14 calculates measurement data on the surface shapes of the measurement target surface 9 (surface roughness and undulations, etc.) based on detection signals of displacements of the stylus 42 (sensing pin 48) inputted from the detector 16.

### [Configuration of Detector]

Figure 4 is a side view of the detector 16. As illustrated in Figure 4, the detector 16 includes a swing fulcrum 40, the stylus 42 (also referred to as an arm or a probe), an urging member 44, a detection sensor 46, the sensing pin 48, and a housing 49 for housing all the elements described above.

The swing fulcrum 40 includes a rotation axis (swing axis) parallel to the Y-axis direction. The swing fulcrum 40 swingably supports the stylus 42.

The stylus 42 includes: a stylus body portion 42a swingably supported by the swing fulcrum 40; a stylus distal end portion 42b extending from the stylus body portion 42a toward one side of stylus longitudinal directions (positive side in the X-axis direction); and a stylus base end portion 42c extending from the stylus body portion 42a toward the other side of the stylus longitudinal directions (negative side in the X-axis direction). Note that the shape of the stylus 42 is not limited to the shape illustrated in Figure 4, and may be properly varied.

A distal end part of the stylus distal end portion 42b includes the sensing pin 48. The sensing pin 48 is a downward sensing pin that protrudes orthogonally or obliquely relative to the longitudinal direction of the stylus 42, i.e., protrudes substantially in the negative side in the Z-axis direction (equivalently, the one direction side of the present invention).

Here, the distal end part of the stylus distal end portion 42b and the sensing pin 48 protrude from the housing 49 toward the positive side in the X-axis direction thereof, and are housed in the below-mentioned nose piece 22.

A base end portion of the stylus base end portion 42c in the negative side in the X-axis direction is provided with a core 46a which forms one portion of the below-mentioned detection sensor 46.

The stylus 42 is, with reference to the swing fulcrum 40, swung in a first rotation direction SW1 toward a side in which the sensing pin 48 is formed and in a second rotation direction SW2 opposite to the first rotation direction SW1. Here, the housing 49 includes therein a regulating member (not shown) which regulates a rotation range of the stylus 42, i.e., a maximum angle position in the first rotation direction SW1 and a maximum angle position in the second rotation direction SW2.

The urging member 44 urges the stylus base end portion 42c toward the positive side in the Z-axis direction. For the urging member 44, for example, various springs such as a coil spring and a plate spring are used. Note that any known urging method other than springs may be used to urge the stylus base end portion 42c. Thus, the stylus 42 is urged around the swing fulcrum 40 as a center, in the first rotation direction SW1 by the urging member 44.

The detection sensor 46 is, for example, a linear variable differential transformer (LVDT), and includes: the core 46a provided to the above-mentioned stylus base end portion 42c; and a coil 46b provided in the housing 49.

The core 46a is an iron core having a shape extending from the stylus base end portion 42c toward the negative side in the Z-axis direction. The coil 46b is provided in the housing 49 and is positioned in the negative side in the Z-axis direction with respect to the stylus base end portion 40c. The core 46a is inserted into the coil 46b in a non-contact manner.

The coil 46b includes a primary coil and two types of secondary coils (not shown). When the primary coil of the coil 46b is excited by the data processing unit 14, a detection signal indicating a position (displacement) of the core 46a in the Z-axis direction is outputted from the two types of secondary coils to the data processing unit 14. As a result, the displacement of the stylus 42 (sensing pin 48) in the Z-axis direction can be detected based on a positional relationship between the swing fulcrum 40, the stylus 42 (sensing pin 48), and the core 46a, and the position of the core 46a in the Z-axis direction detected by the detection sensor 46.

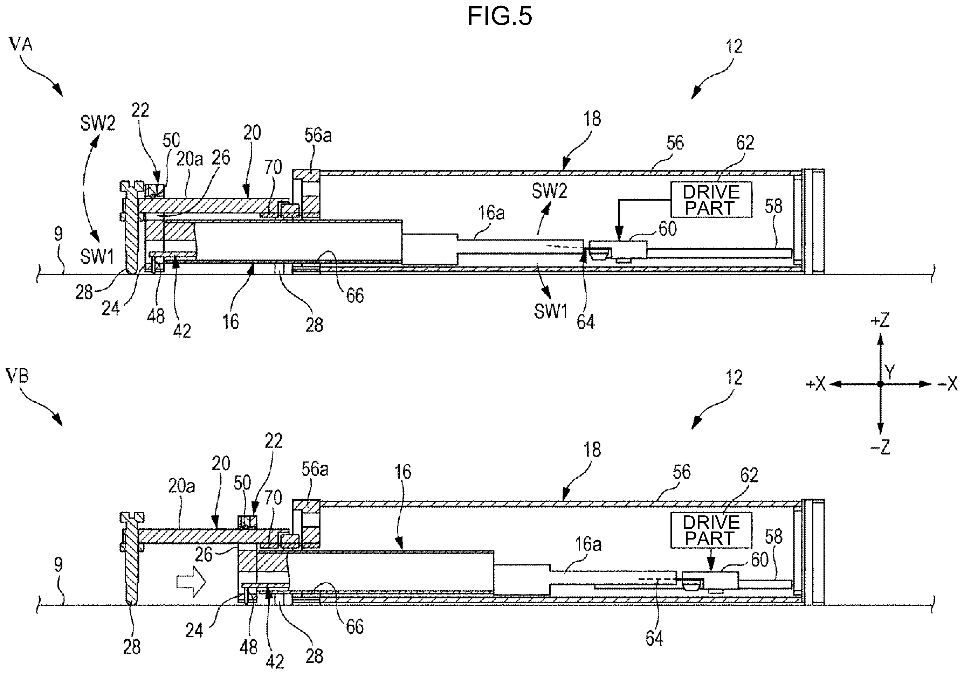

Here, the base end portion of the detector 16 (housing 49) has a detector connection portion 16a connected to the drive unit 18, in the negative side in the X-axis direction (see Figure 5).

The nose piece 22 is attached to a distal end surface side of a distal end portion of the housing 49 in the positive side in the X-axis direction. The nose piece 22 includes a housing space (not shown) for housing the distal end part of the stylus distal end portion 42b and the sensing pin 48. In addition, the nose piece 22 includes the skid 24 provided at a position separated from the housing space in the negative side in the Z-axis direction, i.e., a position separated from the distal end part of the stylus distal end portion 42b in the negative side in the Z-axis direction. Furthermore, in the nose piece 22, the guide insertion hole 26 is formed at a position separated from the housing space in the positive side in the Z-axis direction.

The skid 24 includes:: a skid bottom surface 24a facing the measurement target surface 9; and a sensing pin insertion hole 24b through which the sensing pin 48 is inserted. As described above, because the urging member 44 urges the stylus 42 toward the first rotation direction SW1, the sensing pin 48 protrudes from the skid bottom surface 24a of the skid 24 in the negative side in the Z-axis direction. The protrusion of the sensing pin 48 from the skid bottom surface 24a continues until the stylus 42 is rotated by a certain angle in the second rotation direction SW2 from a predetermined reference rotation position (described below), against the urging force of the urging member 44. Then, a rotation angle of the stylus 42 in the second rotation direction SW2 reaches the certain angle, which reaches to a leveled state where a position of a tip of the sensing pin 48 in the Z-axis direction is leveled with a position of the skid bottom surface 24a in the Z-axis direction, and thus the skid bottom surface 24a becomes in contact with the measurement target surface 9.

Here, the predetermined reference rotation position of the stylus 42 is, for example, an initial rotation position of the stylus 42 in a state where the measurement unit 12 is placed on the measurement target surface 9 (a state before the start of measurement). Note that the reference rotation position may be a maximum rotation position of the stylus 42 in the first rotation direction SW1, and the reference rotation position should not be particularly limited by this example.

The guide insertion hole 26 is a though-hole that passes through the nose piece 22 in a direction parallel to the longitudinal direction of the detector 16 (X-axis direction in Figures). The detector guide 20 (described below) is passed through the guide insertion hole 26. The hole diameter of the guide insertion hole 26 in the Z-axis direction is formed to be larger than the thickness of the detector guide 20 in the Z-axis direction. In addition, an inner wall surface of the nose piece 22 configuring the guide insertion hole 26 includes a guide contact point 50 (corresponding to the second contact point of the present invention) which is brought into contact with a guide top surface 20a of the detector guide 20 in the positive side in the Z-axis direction.

### [Configuration of Drive Unit]

Figure 5 is a cross-sectional view of the measurement unit 12. Here, a reference character VA of Figure 5 designates a state of the start of measurement of the surface shape measurement device 10 (the start of tracing), and a reference character VB designates a state of the completion of measurement of the surface shape measurement device 10 (the completion of tracing).

As illustrated in Figure 5, the drive unit 18 includes: a case 56; and a drive guide 58, a slider 60, a drive part 62, and a plate spring 64 which are housed inside the case 56. The case 56 houses, in addition to the drive part 62, etc., the negative side of the base end portion of the detector 16 (housing 49) in the X-axis direction, and the detector connection portion 16a. Due to this, a detector insertion hole 66 is formed on a case wall surface 56a which is in the positive side in the X-axis direction of the case 56 and orthogonal to the X-axis direction. The detector 16 is passed through the detector insertion hole 66 so as to be freely movable backward and frontward along the X-axis direction.

The drive guide 58 is provided in an area in the negative side in the X-axis direction in the case 56, and has a shape extending in the X-axis direction. The slider 60 is movably provided to the drive guide 58. Therefore, the slider 60 can move in the X-axis direction along the drive guide 58.

The drive part 62 is a known drive mechanism including a motor, a feed screw, etc. (not shown). The drive part 62 is connected to (coupled to) the slider 60, and moves the slider 60 along the drive guide 58 in the X-axis direction.

The plate spring 64 corresponds to the first elastic support member of the present invention, and is formed in a substantially plane shape parallel to the X-Y plane and extending in the X-axis direction. A distal end portion of the plate spring 64 in the positive side in the X-axis direction is connected to the detector connection portion 16a, and a base end portion of the plate spring 64 in the negative side in the X-axis direction is connected to the slider 60. The plate spring 64 supports the detector 16 and the detector connection portion 16a (hereinafter abbreviated as the detector 16, etc.) swingably in the first rotation direction SW1 and second rotation direction SW2 (described above) with respect to the slider 60 (drive unit 18).

In addition, the detector 16, etc. and the slider 60 are coupled to each other by the plate spring 64, and thereby the drive part 62 (described above) moves the detector 16, etc. along the X-axis direction via the slider 60 and the plate spring 64. Then, in a case where the surface shapes of the measurement target surface 9 is measured, under control by the data processing unit 14, the drive part 62 moves the detector 16, etc. from the positive side in the X-axis direction to the negative side in the X-axis direction so that the measurement target surface 9 is traced with the sensing pin 48 of the detector 16 along the X-axis direction.

### [Configuration of Detector Guide]

The detector guide 20 is attached to the case 56 (drive unit 18). The detector guide 20 has a substantially elongated plate shape which is substantially parallel to the measurement target surface 9 and extending in a tracing direction (X-axis direction) of the sensing pin 48. The detector guide 20 is supported, in the X-axis direction, at a position in the positive side in the X-axis direction with respect to the case wall surface 56a of the case 56. In addition, the detector guide 20 is supported, in the Z-axis direction, via the three guide placement points 28, in a surface side of the detector 16 opposite to a surface side facing the measurement target surface 9, i.e., at a position facing a surface of the detector 16 in the positive side in the Z-axis direction.

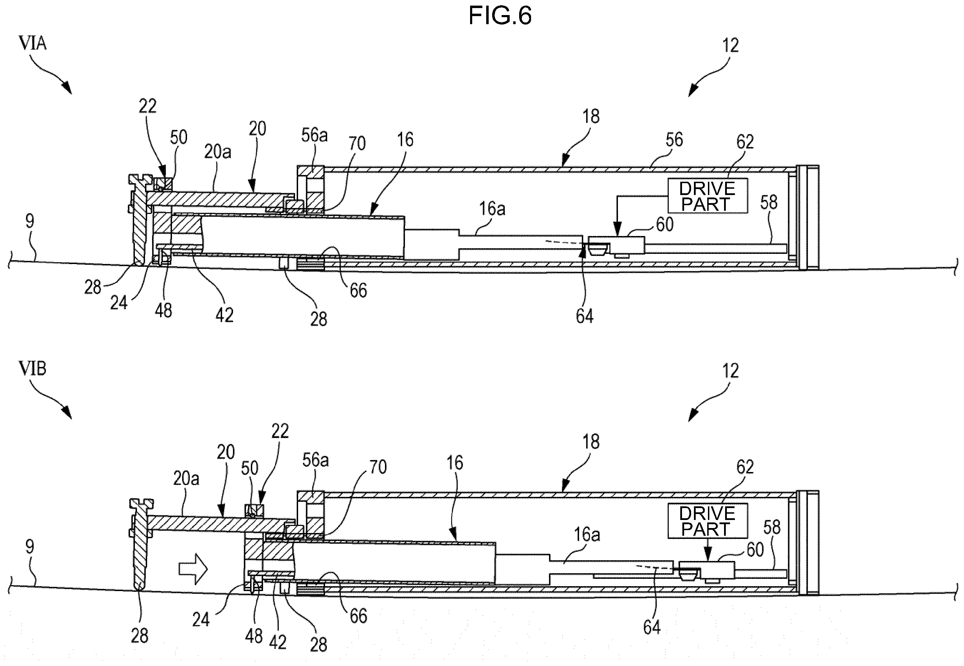

A base end portion of the detector guide 20 in the negative side in the X-axis direction is attached to the case wall surface 56a of the case 56 of the drive unit 18, via a plate spring 70. The plate spring 70 corresponds to the second elastic support member of the present invention. The plate spring 70 is formed in a substantially plane shape which is parallel to the X-Y plane and extending in the X-axis direction. Thus, the detector guide 20 is supported via the plate spring 70 swingably in first rotation direction SW1 and second rotation direction SW2 (described above) with respect to the drive unit 18. As a result, in a case where the measurement target surface 9 is non-horizontal, the detector guide 20 is rotated with reference to the plate spring 70 so that the detector guide 20 can be positioned substantially in parallel to the measurement target surface 9 (see Figure 6).

The guide placement points 28 individually correspond to the first contact points of the present invention. Respective guide placement points 28 have a pin shape extending toward the negative side in the Z-axis direction and are in contact with the measurement target surface 9. For example, one of the guide placement points 28 is provided to a distal end portion of the detector guide 20 in the positive side in the X-axis direction. The other two guide placement points 28 are provided in the base end portion of the detector guide 20 in the negative side in the X-axis direction so as to interpose (sandwich) the detector 16 therebetween in the Y-axis direction. Therefore, the respective guide placement points 28 function as the guide support member(s) of the present invention, and support the detector guide 20 at three points on the measurement target surface 9 in a position in the positive side in the Z-axis direction with respect to the detector 16.

In this way, while the detector guide 20 is rotated with reference to the plate spring 70, the detector guide 20 is three-point-supported on the measurement target surface 9 by the respective guide placement points 28. Therefore, the detector guide 20 can be kept substantially in parallel to the measurement target surface 9 (see Figure 6).

At this time, each of tip positions of the respective guide placement points 28 in the negative side in the Z-axis direction, i.e., each length from the detector guide 20 to each tip of the respective guide placement points 28, can be individually adjusted. Therefore, a vertical position of the detector guide 20 in the Z-axis direction can be adjusted. In addition, even in a case where the measurement target surface 9 is non-horizontal (see Figure 6), the detector guide 20 can be kept substantially in parallel to the measurement target surface 9 by individually adjusting each of the tip positions of the respective guide placement points 28.

The distal end portion of the detector guide 20 in the positive side in the X-axis direction is passed through the guide insertion hole 26 of the above-mentioned nose piece 22. In addition, the guide contact point 50 (described above) is in contact with a surface of the detector guide 20 opposite to a surface of the detector guide 20 facing the detector 16, i.e., the guide top surface 20a. Due to this, the detector guide 20 supports the detector 16 (described above) via the guide contact point 50 (nose piece 22) so as to be movable along the guide top surface 20a.

Accordingly, when the above-mentioned drive unit 18 (drive part 62) moves the slider 60 and the plate spring 64 in the X-axis direction, the detector 16 is moved along the detector guide 20 which is three-point-supported so as to have an attitude substantially parallel to the measurement target surface 9. Thus, because the measurement target surface 9 is traced with the sensing pin 48 of the detector 16 along the detector guide 20 substantially parallel to the measurement target surface 9, a surface shape of the measurement target surface 9 can be measured using the detector guide 20, with reference to a workpiece (with reference to the measurement target surface). And in this case, the surface shape measurement can be performed with accuracy depending on straightness of the detector guide 20.

At this time, the respective guide placement points 28 are adjusted so that the vertical position of the detector guide 20 in the Z-axis direction satisfies following conditions in a state where the measurement unit 12 is placed on the measurement target surface 9 (a state before the start of measurement). The conditions are: leaving a space between the skid 24 and the measurement target surface 9; the sensing pin 48 protruding from the skid bottom surface 24a in the negative side in the Z-axis direction; and the stylus 42 being located substantially in a middle of the rotation range (detection range) of the stylus 42. Therefore, the measurement unit 12 initially performs a skidless measurement at the start of measurement of the surface shapes of the measurement target surface 9.

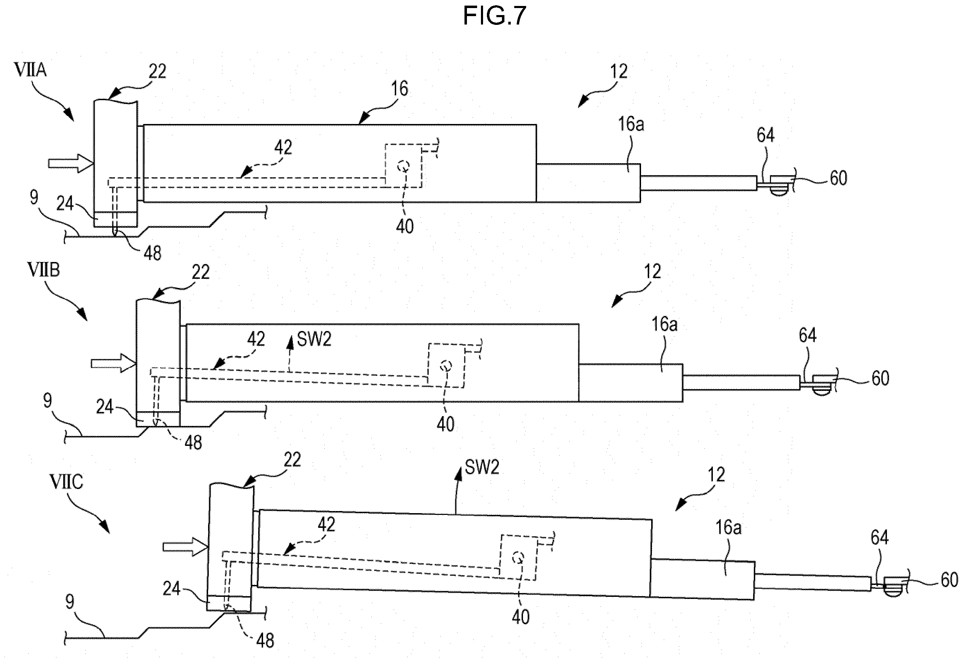

Because the detector guide 20 supports the detector 16 only with the guide top surface 20a, even in a state where the detector 16, etc. are supported by the detector guide 20, the detector 16, etc. can be rotated in the second rotation direction SW2 with reference to the plate spring 64. Therefore, when an additional force is applied from the measurement target surface 9 to the skid bottom surface 24a (including sensing pin 48) toward the positive side in the Z-axis direction (force in a direction opposite to the one direction of the present invention) in a state where the skid bottom surface 24a of the skid 24 is in contact with the measurement target surface 9, the guide top surface 20a loses contact with the guide contact point 50 and the detector 16, etc. is rotated in the second rotation direction SW2 with reference to the plate spring 64. Due to this, for example, in a case where a step or notch on the measurement target surface 9 has a large height, a measurement by the measurement unit 12 is automatically switched from the skidless measurement to a skidded measurement (see Figure 7). Note that a timing of switching from the skidless measurement to the skidded measurement can be desirably adjusted by adjusting the position of the skid 24 in the Z-axis direction.

Figure 6 is a cross-sectional view of the measurement unit 12 in a case where the measurement target surface 9 is non-horizontal. Here, a reference character VIA in Figure 6 designates a state of the surface shape measurement device 10 at the start of measurement (the start of tracing), and a reference character VIB designates a state of the surface shape measurement device 10 at the completion of measurement (the completion of tracing).

As illustrated in Figure 6, when the measurement unit 12 is placed on a non-horizontal measurement target surface 9, the respective guide placement points 28 are independently in contact with the non-horizontal measurement target surface 9 while the detector guide 20 being rotated with reference to the plate spring 70, as described above. Due to this, because the detector guide 20 is three-point-supported on the non-horizontal measurement target surface 9 by the respective guide placement points 28, the detector guide 20 becomes substantially parallel to the non-horizontal measurement target surface 9. As a result, the non-horizontal measurement target surface 9 can be traced with the sensing pin 48 of the detector 16 with reference to the measurement target surface 9 by moving the detector 16, etc. along the detector guide 20.

### [Operation of Surface Shape Measurement Device]

Figure 7 is an explanatory view for a measurement process of the surface shapes of the measurement target surface 9 by the surface shape measurement device 10 having the above-mentioned configuration. As illustrated in a reference character VIIA in Figure 7, the measurement unit 12 of the surface shape measurement device 10 is placed on the measurement target surface 9. Thereby, as illustrated in above-mentioned Figure 5, the respective guide placement points 28 are in contact with the measurement target surface 9, and the detector guide 20 is three-point-supported on the measurement target surface 9 by the respective guide placement points 28. As a result, the detector guide 20 becomes substantially parallel to the measurement target surface 9.

Here, even in a case where the measurement target surface 9 is non-horizontal as illustrated in above-mentioned Figure 6, at the time when the respective guide placement points 28 are brought into contact with the measurement target surface 9, the detector guide 20 is rotated relative to the drive unit 18 in the first rotation direction SW1 or in the second rotation direction SW2, with reference to the plate spring 70. This enables the detector guide 20 to be positioned substantially in parallel to the non-horizontal measurement target surface 9.

When the detector guide 20 is three-point-supported on the measurement target surface 9, the detector 16 is supported on the measurement target surface 9 via the guide top surface 20a of the detector guide 20 and the guide contact point 50 of the nose piece 22. At this time, the vertical position (height position) of the detector guide 20 in the Z-axis direction is adjusted by the respective guide placement points 28 such that a space is formed between the skid 24 and the measurement target surface 9, the sensing pin 48 protrudes from the skid bottom surface 24a toward the negative side in the Z-axis direction, and the stylus 42 is positioned substantially in the middle of the rotation range of the stylus 42. Due to this, because only the sensing pin 48 is in contact with the measurement target surface 9 at the start of measurement, the measurement unit 12 can perform the skidless measurement of the measurement target surface 9.

If an operator inputs a measurement start operation into the operation part 36 of the data processing unit 14, the drive part 62 of the drive unit 18 moves, under the control of the data processing unit 14, the slider 60 and the plate spring 64 along the drive guide 58 from the positive side in the X-axis direction to the negative side in the X-axis direction. Thereby, the detector 16 is moved, via the plate spring 64, etc., in the negative side in the X-axis direction along the detector guide 20 substantially parallel to the measurement target surface 9. Accordingly, it is possible to start the skidless measurement in which the measurement target surface 9 is traced with the sensing pin 48 of the detector 16 with reference to the measurement target surface 9 (workpiece).

The detection sensor 46 of the detector 16 detects the displacement caused by a swing of the stylus 42 (sensing pin 48), and outputs a detection signal of the displacement to the data processing unit 14. The data processing unit 14 calculates the surface shapes of the measurement target surface 9 using a known method based on the detection signals inputted from the detection sensor 46 and movement amounts of the detector 16 moved by the drive unit 18. At this time, because the surface shape measurement device 10 (measurement unit 12) performs the skidless measurement of tracing the measurement target surface 9 with the sensing pin 48 while avoiding contact of the skid 24 with the measurement target surface 9, various surface shapes of the measurement target surface 9, such as shapes of the steps or notches and undulations of the measurement target surface 9 which can be obtained by the skidless measurement, can be simultaneously measured in addition to the surface roughness of the measurement target surface 9. In addition, because a measurement accuracy of the surface shapes depends on the straightness of the detector guide 20, it is possible to measure the surface shapes of the measurement target surface 9 highly accurately at low-cost, without using a large-scale measurement device.

As a height of the step or notch, etc. of the measurement target surface 9 in the positive side in the Z-axis direction becomes gradually larger, the stylus 42 is rotated in the second rotation direction SW2 with reference to the swing fulcrum 40 against the urging force from the urging member 44. Then, as illustrated in a reference character VIIB in the Figure 7, in a case where the stylus 42 is rotated from the reference rotation position by the certain angle in the second rotation direction SW2, a position of the tip of the sensing pin 48 in the Z-axis direction is leveled with a position of the skid bottom surface 24a in the Z-axis direction, to reach the leveled state. Therefore, the skid bottom surface 24a of the skid 24 becomes in contact with the measurement target surface 9.

As illustrated in a reference character VIIC in the Figure 7, the height of the step or notch, etc. of the measurement target surface 9 becomes still larger than the height in the leveled state, force toward the positive side in the Z-axis direction is further applied from the measurement target surface 9 to the skid bottom surface 24a (including the tip of the sensing pin 48). Therefore, the guide top surface 20a of detector guide 20 loses contact with the guide contact point 50 of the nose piece 22, and the detector 16, etc. are rotated in the second rotation direction SW2 with reference to the plate spring 64. Accordingly, the measurement by the surface shape measurement device 10 (measurement unit 12) is switched from the skidless measurement to the skidded measurement.

In the skidded measurement, because the surface shapes of the measurement target surface 9 is measured with reference to the skid 24, only the surface roughness of the measurement target surface 9 is measured, but it is possible to prevent the sensing pin 48 from being caught and damaged by the step or notch, etc. of the measurement target surface 9.

### [Advantageous Effect of the Embodiment]

As described above, in the surface shape measurement device 10 of the embodiment, the detector 16 is moved along the detector guide 20 placed substantially in parallel to the measurement target surface 9. Therefore, the detector 16 can perform skidless measurement of the measurement target surface with the measurement target surface 9 serving as the reference, that is, so-called "with reference to a workpiece (with workpiece reference)". As a result, it is possible to simultaneously measure the surface roughness of the measurement target surface 9 and the surface shapes (shapes, undulations, etc.) other than the surface roughness of the measurement target surface 9. Furthermore, in a case where the step or notch, etc. of the measurement target surface 9 has a large height, the skidless measurement can be automatically switched to the skidded measurement so as to reliably prevent the sensing pin 48 from being damaged. Furthermore, because the measurement accuracy depends on the straightness of the detector guide 20, it is possible to measure the surface shapes of the measurement target surface 9 highly accurately at low-cost.

### [Others]

In the embodiment described above, although the description is given with the plate springs as respective examples of the first elastic support member and the second elastic support member of the present invention, any type of elastic support members other than the plate springs can be used.

In the embodiment described above, although the detector guide 20 is three-point-supported on the measurement target surface 9 with the three guide placement points 28, the number of the guide placement points 28 may be one, or multiple numbers such as two, four or more, so long as the detector guide 20 can be supported in the attitude substantially parallel to the measurement target surface 9. In addition, the shape of the guide placement points 28 is not restricted to a pin shape, and may be properly varied.

In the embodiment described above, although the detector guide 20 is provided to the drive unit 18 via the plate spring 70, the detector guide 20 may be provided separately from the drive unit 18.

In the embodiment described above, although the skid 24 is provided to the detector 16 via the nose piece 22, the skid 24 may be provided directly to the detector 16. In addition, in the embodiment described above, although the sensing pin 48 is inserted through the sensing pin insertion hole 24b of the skid 24, the sensing pin 48 may not be inserted through the skid 24. (see Patent Literature 1 described above).

In the embodiment described above, although the nose piece 22 is provided to a distal end surface in the distal end side (positive side of the X-axis direction) of the detector 16, the attaching position where the nose piece 22 is attached to the detector 16 is not limited to that position. In addition, in the embodiment described above, although the detector 16 is movably supported by the detector guide 20 via the nose piece 22, any type of detector support members may be used so long as the detector support member can support the detector 16 movably with respect to the detector guide 20.

In the embodiment described above, although the description is given with the portable type surface shape measurement device 10 as an example, the present invention can be applied to any stationary (non-portable type) measurement device capable of performing the skidded measurement.

### Reference Signs List

- 9: Measurement target surface,
- 10: Surface shape measurement device,
- 12: Measurement unit,
- 16: Detector,
- 20: Detector guide
- 20a: Guide top surface,
- 22: Nose piece,
- 24: Skid,
- 28: Guide placement point,
- 42: Stylus,
- 44: Urging member,
- 48: Sensing pin,
- 50: Guide contact point,
- 56: Case,
- 62: Drive part,
- 64: Plate spring,
- 70: Plate spring,

## Claims

1. A surface shape measurement device (10) which measures a surface shape of a measurement target surface (9), the surface shape measurement device (10) comprising:
a detector (16) including: a stylus (42) supported swingably around a swing fulcrum (40); a sensing pin (48) provided in a distal end portion of the stylus (42) and extending in one direction orthogonal or oblique to a longitudinal direction of the stylus (42); a skid (24) provided in a position separated from the distal end portion of the stylus (42) in the one direction; and an urging member (44) configured to urge the stylus (42) toward a first rotation direction which is one of rotation directions of the stylus (42) around the swing fulcrum (40) and in which the sensing pin (48) is rotated in the one direction, so as to cause a tip of the sensing pin (48) to protrude from the skid (24) in the one direction;
a first elastic support member (64) configured to support the detector (16) swingably in the first rotation direction and in a second rotation direction opposite to the first rotation direction;
a drive part (62) configured to move the first elastic support member (64) along a driving direction which is orthogonal to an axis direction of the swing fulcrum (40) and parallel to the measurement target surface (9);
a detector guide (20) having a linear shape, and configured to guide the detector (16) driven by the drive part (62) via the first elastic support member (64) along the measurement target surface (9);
a guide support member (28) having one or multiple first contact points to be brought in contact with the measurement target surface (9), and configured to support the detector guide (20) in an attitude substantially parallel to the measurement target surface (9) and at a position facing a surface of the detector (16) opposite to a surface of the detector (16) facing the measurement target surface (9); and
a detector support member (26, 50) provided to the detector (16) and configured to cause the detector guide (20) to support the detector (16) movably along the detector guide (20).

2. The surface shape measurement device (10) according to claim 1, wherein in a case where the stylus (42) is rotated in the second rotation direction from a predetermined reference rotation position against an urging force of the urging member (44), the tip of the sensing pin (48) still protrudes from the skid (24) in the one direction until a rotation angle of the stylus (42) in the second rotation direction reaches a certain angle.

3. The surface shape measurement device (10) according to claim 2, wherein in a case where the rotation angle of the stylus (42) in the second rotation direction reaches the certain angle and a force in a direction opposite to the one direction is further applied to the skid (24), the detector (16) is rotated in the second rotation direction with reference to the first elastic support member (64).

4. The surface shape measurement device (10) according to any one of claims 1 to 3, wherein
the detector support member (26, 50) includes:
a guide insertion hole (26) configured to allow the detector guide (20) to be inserted therethrough; and
a second contact point (50) provided to an inner wall surface configuring the guide insertion hole (26) of the detector support member (26, 50), and configured to be in contact with a surface of the detector guide (20) opposite to a surface of the detector guide (20) facing the detector (16), and
the detector support member (26, 50) causes the detector guide (20) to support the detector (16) via the second contact point (50).

5. The surface shape measurement device (10) according to any one of claims 1 to 4, further comprising:
a case (56) configured to house a part of the detector (16), the first elastic support member (64), and the drive part (62), the case (56) including a case wall surface (56a) orthogonal to the driving direction, and a detector insertion hole (66) formed in the case wall surface (56a) and configured to allow the detector (16) to be inserted therethrough; and
a second elastic support member (70) provided to the case (56) and configured to support the detector guide (20) swingably in the first rotation direction and in the second rotation direction.

6. The surface shape measurement device (10) according to any one of claims 1 to 5, wherein the guide support member (28) is in contact with the measurement target surface (9) at three first contact points.

7. The surface shape measurement device (10) according to any one of claims 1 to 6, wherein the skid (24) includes a sensing pin insertion hole (24b) configured to allow the sensing pin (48) to be inserted therethrough.

## Patentansprüche

1. Eine Oberflächenform-Messvorrichtung (10), die eine Oberflächenform einer Messzieloberfläche (9) misst, wobei die Oberflächenform-Messvorrichtung (10) umfasst:
einen Detektor (16) umfassend: einen Taststift (42), der schwenkbar um einen Schwenkdrehpunkt (40) gelagert ist; einen Abtaststift (48), der in einem distalen Endabschnitt des Taststiftes (42) vorgesehen ist und sich in einer Richtung orthogonal oder schräg zu einer Längsrichtung des Taststiftes (42) erstreckt; eine Kufe (24) bzw. einen Rahmen, die oder der in einer Position vorgesehen ist, die von dem distalen Endabschnitt des Taststiftes (42) in der einen Richtung getrennt ist; und ein Drängelement (44), das dazu eingerichtet ist, den Taststift (42) in eine erste Drehrichtung zu drängen, die eine der Drehrichtungen des Taststiftes (42) um den Schwenkdrehpunkt (40) ist und in der der Abtaststift (48) in der einen Richtung gedreht wird, um zu bewirken, dass eine Spitze des Abtaststiftes (48) von der Kufe (24) in der einen Richtung vorsteht;
ein erstes elastisches Stützelement (64), das dazu eingerichtet ist, den Detektor (16) schwenkbar in der ersten Drehrichtung und in einer zweiten Drehrichtung entgegengesetzt zur ersten Drehrichtung zu stützen;
ein Antriebsteil (62), das dazu eingerichtet ist, das erste elastische Stützelement (64) entlang einer Antriebsrichtung zu bewegen, die orthogonal zu einer Achsenrichtung des Schwenkdrehpunkts (40) und parallel zu der Messzielfläche (9) ist;
eine Detektorführung (20), die eine lineare Form hat und dazu eingerichtet ist, den Detektor (16), der von dem Antriebsteil (62) über das erste elastische Stützelement (64) angetrieben wird, entlang der Messzielfläche (9) zu führen;
ein Führungsträgerelement (28) mit einem oder mehreren ersten Kontaktpunkten, die mit der Messzielfläche (9) in Kontakt zu bringen sind, und das dazu eingerichtet ist, die Detektorführung (20) in einer Lage im Wesentlichen parallel zu der Messzielfläche (9) und an einer Position zu stützen, die einer Fläche des Detektors (16) zugewandt ist, die einer Fläche des Detektors (16) gegenüberliegt, die der Messzielfläche (9) zugewandt ist; und
ein Detektorträgerelement (26, 50), das an dem Detektor (16) vorgesehen und dazu eingerichtet ist, die Detektorführung (20) zu veranlassen, den Detektor (16) beweglich entlang der Detektorführung (20) zu stützen.

2. Die Oberflächenform-Messvorrichtung (10) nach Anspruch 1, wobei in einem Fall, in dem der Taststift (42) in der zweiten Drehrichtung von einer vorgegebenen Referenz-Drehposition gegen eine Drängkraft des Drängelements (44) gedreht wird, die Spitze des Abtaststifts (48) noch von der Kufe (24) in der einen Richtung vorsteht, bis ein Drehwinkel des Taststifts (42) in der zweiten Drehrichtung einen bestimmten Winkel erreicht.

3. Die Oberflächenform-Messvorrichtung (10) nach Anspruch 2, wobei in einem Fall, in dem der Drehwinkel des Taststiftes (42) in der zweiten Drehrichtung den bestimmten Winkel erreicht und eine Kraft in einer Richtung entgegengesetzt zu der einen Richtung weiterhin auf die Kufe (24) ausgeübt wird, der Detektor (16) in der zweiten Drehrichtung in Bezug auf das erste elastische Stützelement (64) gedreht wird.

4. Die Oberflächenform-Messvorrichtung (10) nach einem der Ansprüche 1 bis 3, wobei
das Detektorträgerelement (26, 50) umfasst:
ein Führungseinführungsloch (26), das dazu eingerichtet ist, es der Detektorführung (20) zu erlauben, durch es hindurch eingeführt zu werden; und
einen zweiten Kontaktpunkt (50), der an einer Innenwandfläche vorgesehen ist, die das Führungseinführungsloch (26) des Detektorträgerelements (26, 50) einrichtet, und dazu eingerichtet ist, mit einer Oberfläche der Detektorführung (20) in Kontakt zu sein, die einer Fläche der Detektorführung (20) gegenüberliegt, die dem Detektor (16) zugewandt ist, und
das Detektorträgerelement (26, 50) bewirkt, dass die Detektorführung (20) den Detektor (16) über den zweiten Kontaktpunkt (50) trägt.

5. Die Oberflächenform-Messvorrichtung (10) nach einem der Ansprüche 1 bis 4, ferner umfassend:
ein Gehäuse (56), das dazu eingerichtet ist, einen Teil des Detektors (16), das erste elastische Stützelement (64) und das Antriebsteil (62) aufzunehmen, wobei das Gehäuse (56) eine Gehäusewandfläche (56a) orthogonal zu der Antriebsrichtung und ein Detektoreinführloch (66) aufweist, das in der Gehäusewandfläche (56a) ausgebildet ist und dazu eingerichtet ist, es dem Detektor (16) zu erlauben, durch es hindurch eingeführt zu werden; und
ein zweites elastisches Stützelement (70), das an dem Gehäuse (56) vorgesehen und dazu eingerichtet ist, die Detektorführung (20) schwenkbar in der ersten Drehrichtung und in der zweiten Drehrichtung zu stützen.

6. Die Oberflächenform-Messvorrichtung (10) nach einem der Ansprüche 1 bis 5, wobei das Führungsträgerelement (28) an drei ersten Kontaktpunkten mit der Messzieloberfläche (9) in Kontakt ist.

7. Die Oberflächenform-Messvorrichtung (10) nach einem der Ansprüche 1 bis 6, wobei die Kufe (24) ein Abtaststift-Einführloch (24b) aufweist, das dazu eingerichtet ist, es der Abtaststift (48) zu erlauben, durch es hindurch eingeführt zu werden.

## Revendications

1. Dispositif de mesure de forme de surface (10) qui mesure une forme de surface d'une surface cible de mesure (9), le dispositif de mesure de forme de surface (10) comprenant :
un détecteur (16) comprenant : un stylet (42) supporté de manière oscillante autour d'un point d'appui oscillant (40) ; une broche de détection (48) prévue dans une partie d'extrémité distale du stylet (42) et s'étendant dans une direction orthogonale ou oblique à une direction longitudinale du stylet (42) ; un patin (24) prévu dans une position séparée de la partie d'extrémité distale du stylet (42) dans la première direction ; et un élément de poussée (44) configuré pour pousser le stylet (42) vers une première direction de rotation qui est l'une des directions de rotation du stylet (42) autour du point d'appui pivotant (40) et dans laquelle la tige de détection (48) est tournée dans la première direction, de manière à amener une pointe de la tige de détection (48) à faire saillie du patin (24) dans la première direction ;
un premier élément de support élastique (64) configuré pour supporter le détecteur (16) de manière oscillante dans la première direction de rotation et dans une seconde direction de rotation opposée à la première direction de rotation ;
une partie d'entraînement (62) configurée pour déplacer le premier élément de support élastique (64) le long d'une direction d'entraînement qui est orthogonale à une direction d'axe du point d'appui pivotant (40) et parallèle à la surface cible de mesure (9) ;
un guide de détecteur (20) ayant une forme linéaire, et configuré pour guider le détecteur (16) entraîné par la partie d'entraînement (62) via le premier élément de support élastique (64) le long de la surface cible de mesure (9) ;
un élément de support de guide (28) ayant un ou plusieurs premiers points de contact à mettre en contact avec la surface cible de mesure (9), et configuré pour supporter le guide de détecteur (20) dans une attitude sensiblement parallèle à la surface cible de mesure (9) et à une position faisant face à une surface du détecteur (16) opposée à une surface du détecteur (16) faisant face à la surface cible de mesure (9) ; et
un élément de support de détecteur (26, 50) fourni au détecteur (16) et configuré pour amener le guide de détecteur (20) à supporter le détecteur (16) de manière mobile le long du guide de détecteur (20).

2. Le dispositif de mesure de forme de surface (10) selon la revendication 1, dans lequel dans un cas où le stylet (42) est tourné dans la seconde direction de rotation à partir d'une position de rotation de référence prédéterminée contre une force de poussée de l'élément de poussée (44), la pointe de la broche de détection (48) fait toujours saillie du patin (24) dans la première direction jusqu'à ce qu'un angle de rotation du stylet (42) dans la seconde direction de rotation atteigne un certain angle.

3. Le dispositif de mesure de forme de surface (10) selon la revendication 2, dans lequel dans un cas où l'angle de rotation du stylet (42) dans la deuxième direction de rotation atteint le certain angle et une force dans une direction opposée à la première direction est encore appliquée au patin (24), le détecteur (16) est tourné dans la deuxième direction de rotation par rapport au premier élément de support élastique (64).

4. Le dispositif de mesure de forme de surface (10) selon l'une quelconque des revendications 1 à 3, où
l'élément de support du détecteur (26, 50) comprend :
un trou d'insertion de guide (26) configuré pour permettre l'insertion du guide de détecteur (20) à travers celui-ci ; et
un second point de contact (50) prévu sur une surface de paroi interne configurant le trou d'insertion de guide (26) de l'élément de support de détecteur (26, 50), et configuré pour être en contact avec une surface du guide de détecteur (20) opposée à une surface du guide de détecteur (20) faisant face au détecteur (16), et
l'élément de support de détecteur (26, 50) amène le guide de détecteur (20) à supporter le détecteur (16) via le second point de contact (50).

5. Le dispositif de mesure de forme de surface (10) selon l'une quelconque des revendications 1 à 4, comprenant en outre :
un boîtier (56) configuré pour loger une partie du détecteur (16), le premier élément de support élastique (64), et la partie d'entraînement (62), le boîtier (56) comprenant une surface de paroi de boîtier (56a) orthogonale à la direction d'entraînement, et un trou d'insertion de détecteur (66) formé dans la surface de paroi de boîtier (56a) et configuré pour permettre au détecteur (16) d'être inséré à travers celui-ci ; et
un second élément de support élastique (70) prévu sur le boîtier (56) et configuré pour supporter le guide de détecteur (20) de manière oscillante dans la première direction de rotation et dans la seconde direction de rotation.

6. Le dispositif de mesure de forme de surface (10) selon l'une quelconque des revendications 1 à 5, dans lequel l'élément de support de guide (28) est en contact avec la surface cible de mesure (9) en trois premiers points de contact.

7. Le dispositif de mesure de forme de surface (10) selon l'une quelconque des revendications 1 à 6, dans lequel le patin (24) comprend un trou d'insertion de tige de détection (24b) configuré pour permettre l'insertion de la tige de détection (48) à travers celui-ci.
